# EUROPÄISCHE PATENTANMELDUNG

(11) **EP 2 722 487 A1**
(43) Veröffentlichungstag der Anmeldung: **23.04.2014**
(21) Anmeldenummer: 12189099.0
(22) Anmeldetag: 18.10.2012
(51) Int. Cl.: F01D 11/00, F01D 11/12, F01D 25/24

(54) **Formschlüssige Gehäusebauteilkombination und Verfahern zu ihrer Herstellung**

(71) Anmelder: MTU Aero Engines AG, 80995 München (DE)
(72) Erfinder: Feldmann, Manfred, 82223 Eichenau (DE); Sangl, Janine, Dr., Dachau 85221 (DE); Schinko, Norbert, Dr., 81373 München (DE)

(57) **Zusammenfassung**

Die vorliegende Erfindung betrifft eine Bauteilkombination für eine Umhüllung eines Strömungskanals (10) einer Strömungsmaschine, insbesondere für ein Gehäuse einer Gasturbine oder eines Flugtriebwerks, mit mindestens zwei Bauteilen, wobei ein erstes Bauteil (1) einen geschlossenen Ring bildet, und wobei der geschlossene Ring gegenüber mindestens einem zweiten Bauteil (2) axial und/oder radial bezogen auf den Strömungskanal formschlüssig gehalten wird und aus oder in diese Position ohne Veränderung des zweiten Bauteils lediglich durch elastische Verformung des Rings gelangen kann, sowie ein Verfahren zur Herstellung einer derartigen Bauteilkombination und eine entsprechende Strömungsmaschine mit einer derartigen Bauteilkombination.

## Beschreibung

### GEBIET DER ERFINDUNG

Die vorliegende Erfindung betrifft eine Bauteilkombination für eine Umhüllung eines Strömungskanals einer Strömungsmaschine, insbesondere für ein Gehäuse einer Gasturbine oder eines Flugtriebwerks, sowie ein Verfahren zur Herstellung einer derartigen Bauteilkombination und einer Strömungsmaschine mit einer entsprechenden Bauteilkombination.

The work leading to this invention has received funding from the European Union's Seventh Framework Programme (FP7/2007-2013) for the Clean Sky Joint Technology Initiative under grant agreement n° CSJU-GAM-SAGE-2008-001.

### STAND DER TECHNIK

Bei der Herstellung von Strömungsmaschinen, wie Gasturbinen und Flugtriebwerken, müssen für eine den Strömungskanal umgebende Gehäusestruktur vielfältige Bauteile miteinander verbunden werden, die unterschiedliche Aufgaben erfüllen müssen. Neben lasttragenden Gehäusebauteilen müssen Hitzeschutzbleche, Dichtungen, Isolierungen und deren Träger, Auskleidungen und dergleichen miteinander verbunden werden. Neben Flansch - Verbindungen kommen auch Bajonette - oder Schrumpfverbindungen, bei denen beispielsweise ringförmige Bauteile vor dem Fügen zur Änderung ihrer Dimension aufgeheizt oder abgekühlt werden, zum Einsatz. Darüber hinaus werden Stift- und Schraubverbindungen, aber auch stoffflüssige Verbindungen, wie beispielsweise das Verschweißen von geschlitzten Ringen in ihrer endgültigen Montageposition, verwendet.

Der Nachteil der bekannten Verbindungstechniken liegt darin, dass der Aufwand für deren Herstellung durch die Montage einer Vielzahl von Bauteilen oder durch die Durchführung von zusätzlichen und oftmals umständlichen Operationen, wie Aufheizen, Abkühlen, Schweißen usw. sehr hoch ist.

### OFFENBARUNG DER ERFINDUNG

### AUFGABE DER ERFINDUNG

Es ist deshalb Aufgabe der vorliegenden Erfindung, eine Bauteilkombination sowie ein Verfahren zur Herstellung einer entsprechenden Bauteilkombination, insbesondere im Hinblick auf die Herstellung von Strömungsmaschinen bereitzustellen, wobei eine einfache Montage der Bauteile bei gleichzeitig sicherer und definierter Anordnung der Bauteile angestrebt wird.

### TECHNISCHE LÖSUNG

Diese Aufgabe wird gelöst durch eine Bauteilkombination mit den Merkmalen des Anspruchs 1 sowie einem Verfahren zur Herstellung einer entsprechenden Bauteilkombination mit den Merkmalen des Anspruchs 9. Darüber hinaus ist Gegenstand der vorliegenden Anmeldung, eine Strömungsmaschine mit einer entsprechenden Bauteilkombination nach Anspruch 11. Vorteilhafte Ausgestaltungen sind Gegenstand der abhängigen Ansprüche.

Der Erfindung liegt die Idee zugrunde, dass eine entsprechende Bauteilkombination bzw. eine Verbindung von mindestens zwei Bauteilen insbesondere für den Einsatz in Gehäusestrukturen für Strömungsmaschinen, wie Gasturbinen und Flugtriebwerken, auch dadurch bewerkstelligt werden kann, dass elastische Schnappverbindungen eingesetzt werden. Dadurch lässt sich auf sichere und einfache Weise ein erstes Bauteil in Form eines geschlossenen Rings an einem zweiten Bauteil anordnen, sodass das erste Bauteil in Form des geschlossenen Rings in axialer und/oder radialer Richtung, bezogen auf den Strömungskanal, formschlüssig gehalten wird, wobei zur Einbringung des ersten Bauteils in diese Formschlussposition oder zum Entfernen des ersten Bauteils aus dieser Formschlussposition eine elastische Verformung des ersten Bauteils erforderlich ist (Einschnappen), sofern das zweite Bauteil selbst nicht verändert wird.

Beispielsweise kann das zweite Bauteil durch ein äußeres Gehäuse einer Strömungsmaschine, wie eines Flugtriebwerks, gebildet sein, wobei das erste Bauteil in Form eines geschlossenen, ringförmigen Blechteils in axialer und radialer Richtung an dem zweiten Bauteil formschlüssig gehalten wird. Um jedoch in die Formschlussposition zu gelangen oder aus ihr entnommen zu werden, muss das erste Bauteil in Form des geschlossenen Rings elastisch verformt werden, um an den Formschlusselementen vorbei bewegt werden zu können. Bei einem kegelstumpfförmigen Gehäuseabschnitt als zweites Bauteil und einem ebenfalls kegelstumpfförmigen Blechteil als erstes Bauteil, welches innerhalb des Gehäuses angeordnet werden soll, kann beispielsweise das innere Blechteil durch eine radial und axial vom Gehäuseabschnitt vorstehende Nase gehalten werden, sodass in Kombination mit der kegelstumpfförmigen Form von Gehäuse und Blechteil eine axial und radial definierte Position gegeben ist. Aus dieser Position oder in diese Position kann das Blechteil nur durch eine elastische Verformung des Blechteils gebracht werden, wobei nach Relaxation der elastischen Verformung das Blechteil in der Formschlussposition gegenüber dem zweiten Gehäusebauteil vorliegt. Durch die elastische Verformung ist es möglich das erste Bauteil an den Formschlusselementen des zweiten Bauteils vorbei zu bewegen. Nach der Positionierung in der Formschlussposition kann die elastische Verformung wieder beendet werden, so dass das erste Bauteil sozusagen in die Formschlussposition einschnappt.

Neben einer radialen und axialen Formschlussposition kann das erste Bauteil, also beispielsweise das innere Blechteil, auch lediglich radial oder axial festgelegt sein und im Bezug auf weitere Freiheitsgrade durch andere geeignete Maßnahmen gehalten werden. Darüber hinaus ist es auch möglich, dass das elastisch verformbare erste Bauteil, welches formschlüssig zu einem zweiten Bauteil angeordnet werden soll, nicht nur radial innen zum zweiten Bauteil angeordnet wird, sondern auch radial außen zum zweiten Bauteil, sodass beispielsweise das zweite Bauteil eine innere Gehäusewand sein kann und das erste Bauteil eine außerhalb davon angeordnete Komponente.

Das zweite Bauteil, an dem das erste, elastisch verformbare Bauteil durch Formschluss angeordnet wird, kann eine höhere Festigkeit und/oder Steifigkeit als das erste Bauteil aufweisen, um die elastische Verformung im Wesentlichen auf das erste Bauteil zu beschränken. Insbesondere kann das zweite Bauteil aus einem Material gebildet sein, das einen höheren Elastizitätsmodul aufweist, als das Material, aus dem das erste Bauteil gefertigt ist.

Das erste Bauteil kann nach Einbringen in die Formschlussposition weiterhin elastisch verspannt sein, um durch die elastische Verspannung beispielsweise eine besonders dichte Anlage an das zweite Bauteil zu realisieren.

Die Herstellung einer entsprechenden Bauteilkombination erfolgt so, dass zunächst das erste Bauteil in Form eines geschlossenen Rings und mindestens ein zweites Bauteil, beispielsweise in Form eines Gehäuses, bereitgestellt werden, wobei anschließend der Ring elastisch verformt wird und im elastischen Verformungszustand in die Formschlussposition bezüglich des zweiten Bauteils gebracht wird. Wenn der Ring in der Formschlussposition angeordnet idt, wird der Ring zumindest teilweise relaxiert, um formschlüssig im zweiten Bauteil gehalten zu werden.

Beim Einbringen des ersten Bauteils in die Formschlussposition gegenüber dem zweiten Bauteil, kann es zu einer Relativbewegung von erstem und zweitem Bauteil kommen, sodass das erste und/oder zweite Bauteil eine Oberflächenbeschichtung oder -behandlung aufweisen können, die ein gegenseitiges Gleiten erleichtern.

Darüber hinaus können die Form und Dimensionen des ersten Bauteils und/oder des zweiten Bauteils sowie die entsprechende Materialauswahl so gewählt werden, dass die Verformung des ersten Bauteils zur Anbringung an dem zweiten Bauteil rein elastisch abläuft und keine plastische Verformung auftritt.

### KURZBESCHREIBUNG DER FIGUR

Die einzige beigefügte Figur zeigt in einer rein schematischen Darstellung einen teilweisen Querschnitt durch eine Gehäusestruktur eines Flugtriebwerks.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Figur deutlich. Allerdings ist die Erfindung nicht auf dieses Ausführungsbeispiel beschränkt.

Die Figur zeigt in einer teilweisen Querschnittansicht einen Teil einer Gehäusestruktur eines Flugtriebwerks mit einem äußeren Gehäuseteil 2, welches ringförmig umlaufend um den Strömungskanal 10 angeordnet ist. Im Strömungskanal 10 sind Lauf- und Leitschaufeln (nicht dargestellt) angeordnet, mit deren Hilfe der Gasstrom durch den Strömungskanal 10 geleitet wird und die durch den Gasstrom angetrieben werden, um die in die Strömungsmaschine eingesaugte Luft zu verdichten und zusammen mit dem Brennstroff in der Brennkammer zu verbrennen, um so die Strömungsmaschine anzutreiben. In der Figur ist ein Teil einer Laufschaufel 9 dargestellt, deren Spitze gegenüber einem Anstreifbelag 8 dreht, der an einer inneren Gehäusewand 7 angeordnet ist.

Zwischen der inneren Gehäusewand 7 und dem äußeren Gehäuse 2 sind verschiedene Komponenten, wie Hitzeschutzbleche, Isolierungen, Dichtbleche und dergleichen angeordnet, wobei einzelne Komponenten unter Umständen mehrere Funktionen erfüllen.

In dem gezeigten Gehäuseabschnitt ist eine erfindungsgemäße Bauteilkombination mit dem äußeren Gehäuse 2 und einem inneren Blechteil 1 verwirklicht. Wie sich aus der Figur ergibt, weist das äußere Gehäuse 2 genauso wie das Blechteil 1 eine kegelstumpfförmige Ringstruktur auf, wobei sich der Durchmesser des Gehäuses 2 und des Blechteils 1 von der linken Bildseite zur rechten Bildseite erweitert. Das Gehäuse 2 kann aus mehreren Segmenten aufgebaut sein, die entlang des Umfangs zusammengesetzt sind und zusammen die Ringstruktur des Gehäuses 2 ergeben. Die einzelnen Segmente können hierbei über Flansch - Verbindungen (nicht gezeigt) oder dergleichen miteinander verbunden sein. Darüber hinaus ist das Gehäuse 2 stromabwärts und stromaufwärts des Strömungskanals 10 mit weiteren Gehäusebauteilen (nicht gezeigt) verbunden.

Das Blechteil 1 ist ebenfalls als kegelstumpfförmiger Ring ausgebildet, wobei der Ring einstückig als geschlossener Ring ausgebildet ist.

Das ringförmige Blechteil 1 lässt sich bei der Montage in einfacher Weise im Bereich der Öffnung der Gehäuseringstruktur mit dem größeren Durchmesser in axialer Richtung einschieben, bis die Vorsprünge 4, 5 an dem Blechteil 1 an der Innenseite des Gehäuses 2 anliegen.

Das Gehäuse 2 weist ferner im Bereich der Öffnung mit größerem Durchmesser einen axial und radial hervorstehenden Vorsprung auf, an dem eine Schulter 3 mit einem radial vorstehenden Absatz ausgebildet ist.

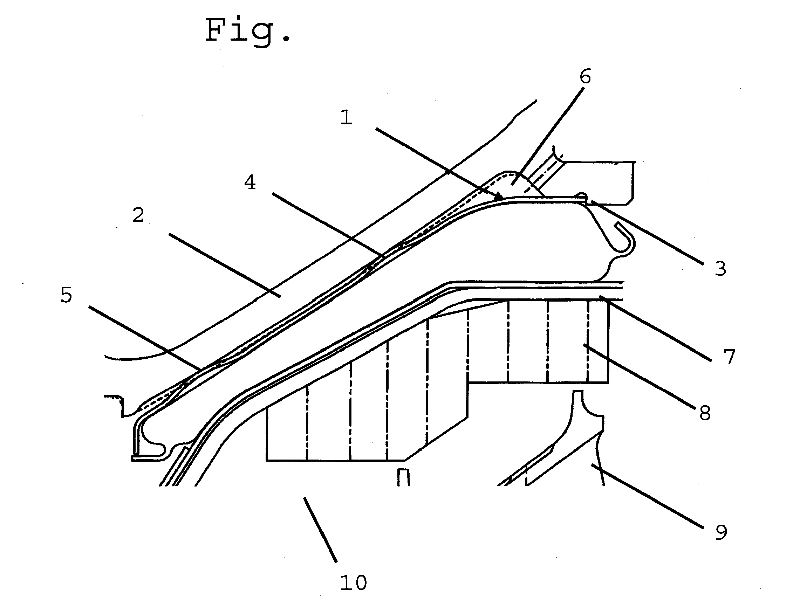

Bei der Darstellung der Figur 1 ist das Blechteil 1 bereits in einer Formschlussposition in dem Gehäuseteil 2 aufgenommen, wobei ein Ende des Blechteils 1, nämlich das Ende mit dem größeren Öffnungsdurchmesser, an der Schulter 3 in axialer Richtung anliegt. Um in diese Formschlussposition zu gelangen, muss jedoch das Blechteil 1 elastisch verformt, insbesondere gebogen werden. Beispielsweise kann dies dadurch geschehen, dass das Blechteil 1 an der Krümmung im Bereich der größeren Öffnung in einen Freiraum 6 des Gehäuses 2 gedrückt wird, so dass das entsprechende ringförmige Ende des Blechteils 1 über die Schulter 3 gleitet und nach Relaxation der elastischen Verformung im Bereich der Schulter 3 zu liegen kommt und dort formschlüssig gehalten wird.

Um während des Biegevorgangs ein gegenseitiges Gleiten des Gehäuses 2 und des Blechteils 1 an den entsprechenden Kontaktstellen, wie beispielsweise im Bereich des Gehäusevorsprungs, zu ermöglichen, können entweder das Gehäuse 2 oder das Blechteil 1 bzw. beide mit einer entsprechenden Oberflächenbeschichtung oder -behandlung so gestaltet sein, dass das Gleiten in einfacher Weise ermöglicht wird. Als einfachste Maßnahme kann in den entsprechenden Bereichen ein Gleitmittelauftrag vorgesehen werden.

Nach der Relaxation der elastischen Verformung des Blechteils 1 kann in der Formschlussposition weiterhin eine elastische Verspannung des Blechteils 1 vorliegen, indem beispielsweise das Blechteil 1 weiterhin gegen die Innenseite des Gehäuses 2 drückt, sodass die Vorsprünge 4 und 5 elastisch verspannt an der Innenseite des Gehäuses 2 anliegen können. Dadurch kann die Dichtwirkung des Blechteils 1 verbessert werden.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden, solange der Schutzbereich der beigefügten Ansprüche nicht verlassen wird. Die vorliegende Erfindung offenbart sämtliche Kombinationen aller vorgestellten Einzelmerkmale.

## Patentansprüche

1. Bauteilkombination für eine Umhüllung eines Strömungskanals einer Strömungsmaschine, insbesondere für ein Gehäuse einer Gasturbine oder eines Flugtriebwerks, mit mindestens zwei Bauteilen (1,2), wobei ein erstes Bauteil (1) einen geschlossenen Ring bildet,
**dadurch gekennzeichnet, dass**
der geschlossene Ring (1) gegenüber mindestens einem zweiten Bauteil (2) axial und/oder radial bezogen auf den Strömungskanal (10) formschlüssig gehalten wird und aus oder in diese Position ohne Veränderung des zweiten Bauteils lediglich durch elastische Verformung des Rings gelangen kann.

2. Bauteilkombination nach Anspruch 1,
**dadurch gekennzeichnet, dass**
das erste Bauteil (1) radial innen oder radial außen zum zweiten Bauteil (2) angeordnet ist.

3. Bauteilkombination nach Anspruch 1 oder 2,
**dadurch gekennzeichnet, dass**
das zweite Bauteil (2) aus mehreren Segmenten aufgebaut ist.

4. Bauteilkombination nach einem der vorhergehenden Ansprüche,
**dadurch gekennzeichnet, dass**
erstes und zweites Bauteil im Wesentlichen kegelstumpfförmig ausgebildet sind und das zweite Bauteil (2) einen radial vorstehenden Bereich (3) aufweist, durch den der Formschluss bewirkt wird.

5. Bauteilkombination nach einem der vorhergehenden Ansprüche,
**dadurch gekennzeichnet, dass**
das zweite Bauteil (2) eine höhere Festigkeit und/oder Steifigkeit als das erste Bauteil (1) aufweist.

6. Bauteilkombination nach einem der vorhergehenden Ansprüche,
**dadurch gekennzeichnet, dass**
das Material, aus dem das zweite Bauteil (2) gefertigt ist, einen höheren Elastizitätsmodul aufweist als das Material, aus dem das erste Bauteil (1) gefertigt ist.

7. Bauteilkombination nach einem der vorhergehenden Ansprüche,
**dadurch gekennzeichnet, dass**
das erste Bauteil (1) zusätzlich zum Formschluss elastisch verspannt in der Position des Formschlusses gehalten wird.

8. Bauteilkombination nach einem der vorhergehenden Ansprüche,
**dadurch gekennzeichnet, dass**
das erste und/oder das zweite Bauteil so geformt sind, dass eine elastische Verformung des ersten Bauteils (1) zur Entfernung aus oder Einbringung in die Formschlussposition möglich ist und/oder dass das erste und/oder zweite Bauteil eine Oberflächenbeschichtung oder - behandlung aufweisen, die gegenseitiges Gleiten ermöglicht.

9. Verfahren zur Herstellung einer Bauteilkombination aus einem ersten Bauteil und mindestens einem zweiten Bauteil nach einem der vorhergehenden Ansprüche,
**dadurch gekennzeichnet, dass**
das erste Bauteil (1) in Form eines geschlossenen Rings und das mindestens eine zweite Bauteil (2) bereit gestellt werden, dass der Ring elastisch verformt wird und im elastisch verformten Zustand in die Formschlussposition bezüglich des zweiten Bauteils gebracht wird und dass der Ring in der Formschlussposition zumindest teilweise relaxiert wird.

10. Verfahren nach Anspruch 9,
**dadurch gekennzeichnet, dass**
mindestens ein Element der Gruppe, die die Dimensionen von erstem Bauteil und/oder zweitem Bauteil, die Steifigkeit von erstem und/oder zweitem Bauteil, die Bauform des ersten und/oder des zweiten Bauteils, die Streckgrenze des Materials von erstem und/oder zweitem Bauteil umfasst, ausgewählt wird, um die Verformung des ersten Bauteils während der Montage so einzustellen, dass keine plastische Verformung auftritt.

11. Strömungsmaschine, insbesondere Gasturbine oder Flugtriebwerk mit einer Bauteilkombination nach einem der Ansprüche 1 bis 8.

12. Strömungsmaschine nach Anspruch 11,
**dadurch gekennzeichnet, dass**
das zweite Bauteil (2) ein äußeres Gehäuse und das erste Bauteil (1) mindestens eine Komponente aus der Gruppe ist, die Hitzeschutzbleche, Isolierungsträger, Dichtungen und Auskleidungen umfasst.
